# EUROPEAN PATENT SPECIFICATION

(11) **EP 3 814 151 B1**
(45) Date of publication and mention of the grant of the patent: **13.12.2023**
(21) Application number: 18924038.5
(22) Date of filing: 29.06.2018
(51) Int. Cl.: B60C 11/03, B60C 11/12, B60C 11/13

(54) **A TREAD FOR IMPROVED SNOW PERFORMANCE**
LAUFFLÄCHE FÜR VERBESSERTES SCHNEEVERHALTEN
BANDE DE ROULEMENT AMÉLIORANT LES PERFORMANCES SUR LA NEIGE

(43) Date of publication of application: 05.05.2021
(73) Proprietor: COMPAGNIE GENERALE DES ETABLISSEMENTS MICHELIN, 63000 Clermont-Ferrand (FR)
(72) Inventor: UCHIDA, Tomotake, Tokyo 163-1073 (JP)
(74) Representative: M.F.P. Michelin
(86) International application number: PCT/JP2018/024771
(87) International publication number: WO 2020/003485

(56) References cited:
- EP-A1- 2 803 501
- EP-A1- 3 173 255
- EP-A2- 1 872 974
- WO-A1-2019/105619
- JP-A- 2002 046 424
- JP-A- 2006 176 055
- JP-A- 2009 107 376
- JP-A- 2011 031 831
- JP-A- 2011 140 253
- JP-A- 2012 126 363
- JP-A- 2015 089 724
- US-A1- 2003 136 487
- US-A1- 2011 220 256

## Description

### [Technical Field]

The present invention relates to a tire, in particular to a tire for improving snow performance while maintaining wet performance.

### [Background Art]

In recent years, a tire so-called "all-season" tire which has capability to drive on wintry surface while maintaining high speed driving capability on non-wintry surface is beginning to popularize.

Also to a tire so-called "studless" tire which is suitable for driving on ice covered and/or snow covered wintry surface, there is a desire to increase performance on non-wintry surface that is not covered by ice nor snow while still improving performance on wintry surface.

In order to increase performance on wintry surface especially snow performance, it is known to provide a stud-like projection, made of rubber or a metal or other, projecting from a contact face is effective as such the stud-like projection generates high pressure to scrape snow. It is also known that such the way impacts negatively performance on non-wintry surface especially wet performance. Also, use of metal stud is prohibited in many countries for environmental reason.

JP2017-105411 discloses a pneumatic tire having a tread consisting of a projection portion projecting radially for improving tire noise.

JP2011-140254 discloses also a pneumatic tire having a tread consists of a projection portion projecting radially for improving tire noise.

JP2011-031831 discloses a pneumatic tire having a tread with predetermined rotational direction consists of a projection portion projecting radially for irregular wear improvement while maintaining traction performance on wet and wintry surface.

JP2007-022242 discloses a pneumatic tire having a tread with predetermined rotational direction consists of a plurality of fine ribs (proj ection portion) each having a triangular cross sectional shape being arranged as a saw blade for better traction performance on wintry surface. Other examples of tires are disclosed in JP 2011 140253 A, EP 2803501 A1, JP 2002 046424 A, EP 3173255 A1, JP 2012 126363 A and WO 2019/105619 A1

### [Citation List]

### [Patent Literature]

[PTL 1]
   JP2017-105411
[PTL 2]
   JP2011-140254
[PTL 3]
   JP2011-031831
[PTL 4]
   JP2007-022242

However with the solutions disclosed in these documents, performance on wintry surface and on non-wintry surface are not improved simultaneously, and there is a desire to further improvement of both the performance simultaneously at higher level.

Therefore, there is a need for a tread for a tire which provides higher performance on wintry surface and on non-wintry surface at the same time.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

An "incision", also referred to as a "sipe", is a narrow cutout formed toward radially inwardly from a surface of a tread made by, for example a thin blade having a shape like a knife blade. A width of the incision at the surface of the tread is narrower than a groove, for example less than or equal to 2.0mm. This incision may, different from the groove, be partly or completely closed when such the incision is in a contact patch and under usual rolling condition.

A "contact patch" is a footprint of a tire mounted onto its standard rim as identified in tire standards such as ETRTO, JATMA or TRA, and inflated at its nominal pressure and under its nominal load.

It is thus an object of the invention to provide higher performance on wintry surface and on non-wintry surface at the same time.

### [Summary of Invention]

The present invention provides a tire as defined in appended claim 1 and the corresponding dependent claims. The present application also discloses a tread for a tire having a contact face intended to come into contact with ground during rolling, the tread being provided with a plurality of groove of a depth D and/or a plurality of incision of a depth d extending generally in axial orientation of the tire and being disposed such that at least two grooves or two incisions or one groove and one incision being always located within a contact patch, the plurality of groove and/or the plurality of incision delimitating a plurality of contact element, the plurality of contact element having a top face constituting a part of the contact face and a frontal face facing to the groove or to the incision, the top face and the frontal face creating an edge at an intersection between the top face and the frontal face, at least one of the plurality of contact element being provided with at least one projection portion projecting radially outwardly from the top face with a radial height h in a region between the closest edge and 40% of a circumferential length of the contact element from the closest edge, the projection portion is provided with a chamfered portion on a side facing to the closest edge, and in that the chamfered portion has an angle A relative to the top face on cross sectional view along with circumferential orientation, the projection portion further comprises a flat portion parallel to the top face.

This arrangement provides higher performance on wintry surface and on non-wintry surface at the same time.

Since the contact element is provided with at least one projection portion projecting radially outwardly from the top face with a radial height h, such the projection portion is able to generate high pressure to scrape snow, performance on wintry surface especially snow performance can be improved.

Since the projection portion is provided with a chamfered portion on a side facing to the closest edge and the chamfered portion has an angle A relative to the top face on cross sectional view along with circumferential orientation, such the chamfered portion is able to prevent generating too high pressure and avoid curling of the projection portion, performance on non-wintry surface can be improved at the same time.

If the projection portion is provided outside of the region between the closest edge and 40% of a circumferential length of the contact element from the closest edge, there is a risk that performance on wintry surface would be degraded as the projection portion cannot generate high contact pressure efficiently. By placing the projection portion in the region between the closest edge and 40% of a circumferential length of the contact element from the closest edge, the projection portion can generate high contact pressure efficiently.

If the chamfered portion is provided on a side opposite to the closest edge, the chamfered portion would be less effective to prevent generating too high pressure and difficult to prevent curling of the projection portion, performance on non-wintry surface cannot be improved even performance on wintry surface may be improved. By placing the chamfered portion on the side facing to the closest edge, it is possible to improve performance on wintry surface and on non-wintry surface at the same time.

In another preferred embodiment, radially innermost of the chamfered portion is distant from the top face when the tread being brand new.

According to this arrangement, it is possible to make longer a radial length along with the projection portion with the chamfered portion to be contact with wintry surface, thus performance on wintry surface can further be improved.

In another preferred embodiment, the projection portion further comprises a flat portion parallel to the top face.

According to this arrangement, it is possible to make an angle between the chamfered portion and ground in view of the projection portion obtuse for preventing generation of too high pressure due to the projection portion and occurrence of curling of the projection portion, thus performance on non-wintry surface can further be improved.

In another preferred embodiment, the chamfered portion is provided in a whole width of the projection portion.

According to this arrangement, it is possible to increase effectiveness of the projection portion provided with the chamfered portion, thus performance on both wintry surface and non-wintry surface can further be improved.

In another preferred embodiment, the radial height h of the projection portion is at most equal to 20% of the depth D of the groove or the depth d of the incision whichever is deeper.

If this radial height h of the projection portion is more than 20% of the depth D of the groove or the depth d of the incision whichever is deeper, there is a risk that the projection portion would buckle easily which makes difficult to scrape snow thus performance on wintry surface would be degraded. By setting this height h of the projection portion at most equal to 20% of the depth D of the groove or the depth d of the incision whichever is deeper, it is possible to improve effectively performance on wintry surface.

This height h of the projection portion relative to the depth D of the groove or the depth d of the incision whichever is deeper is preferably at most equal to 15% and at least equal to 0.3 mm, more preferably at most equal to 15% and at least equal to 0.5 mm.

In another preferred embodiment, the angle A of the chamfered portion is from 30 to 60 degrees.

If the angle A of the chamfered portion is less than 30 degrees, there is a risk that the chamfered portion would be less effective to prevent generating too high pressure thus performance on non-wintry surface would be degraded. If the angle A of the chamfered portion is more than 60 degrees, there is a risk that the chamfered portion would be less effective to prevent curling of the projection portion, thus performance on non-wintry surface would be degraded also. By setting this angle A of the chamfered portion from 30 to 60 degrees, it is possible to effectively improve performance on non-wintry surface.

In another preferred embodiment, the projection portion is flush with the frontal face of the contact element at least partly.

According to this arrangement, it is possible to place the projection portion where the projection portion generates high contact pressure efficiently, thus performance on wintry surface would further be improved.

In another preferred embodiment, the projection portion is offset from the closest edge.

According to this arrangement, it is possible to increase a degree of freedom for placing the projection portion, thus balance between performance on wintry surface and on non-wintry surface would be improved.

In another preferred embodiment, a rubber composition constituting the projection portion is the same as a rubber composition constituting the contact element.

According to this arrangement, it is possible to manufacture efficiently the tread having the contact element provided with the projection portion comprising the chamfered portion, thus manufacturing efficiency of such the tread would be improved.

### [Advantageous Effects of Invention]

According to the arrangements described above, it is possible to provide higher performance on wintry surface and on non-wintry surface at the same time.

### [Brief Description of Drawings]

Other characteristics and advantages of the invention arise from the description made hereafter in reference to the annexed drawings which show, as nonrestrictive examples, the embodiment of the invention.

### In these drawings:

[Fig. 1]

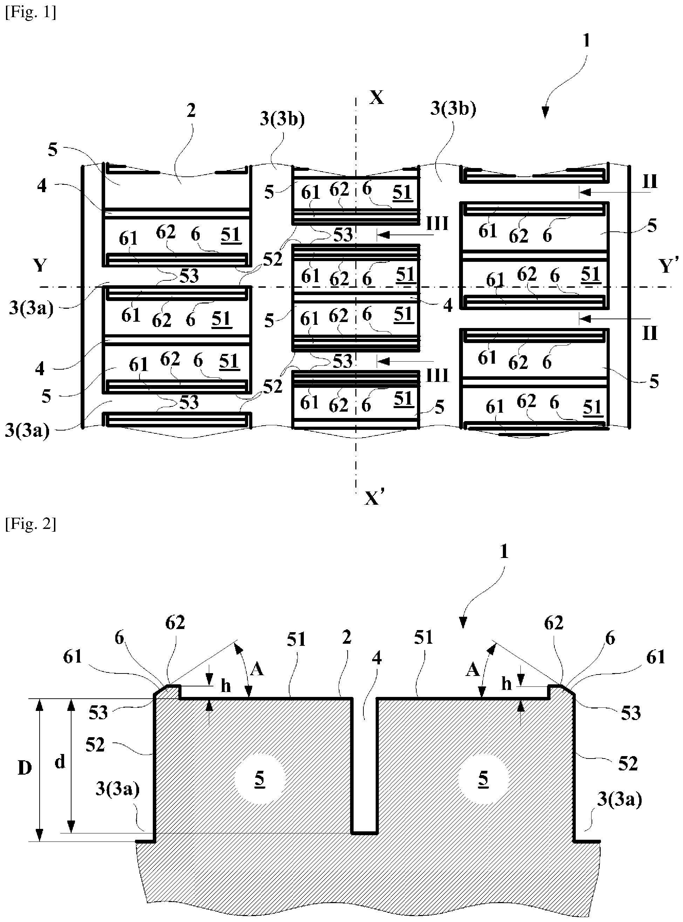

   Fig. 1 is a schematic plan view of a tread according to a first embodiment of the present invention;
[Fig. 2]
   Fig. 2 is a cross sectional view taken along line II-II in Fig. 1;
[Fig. 3]

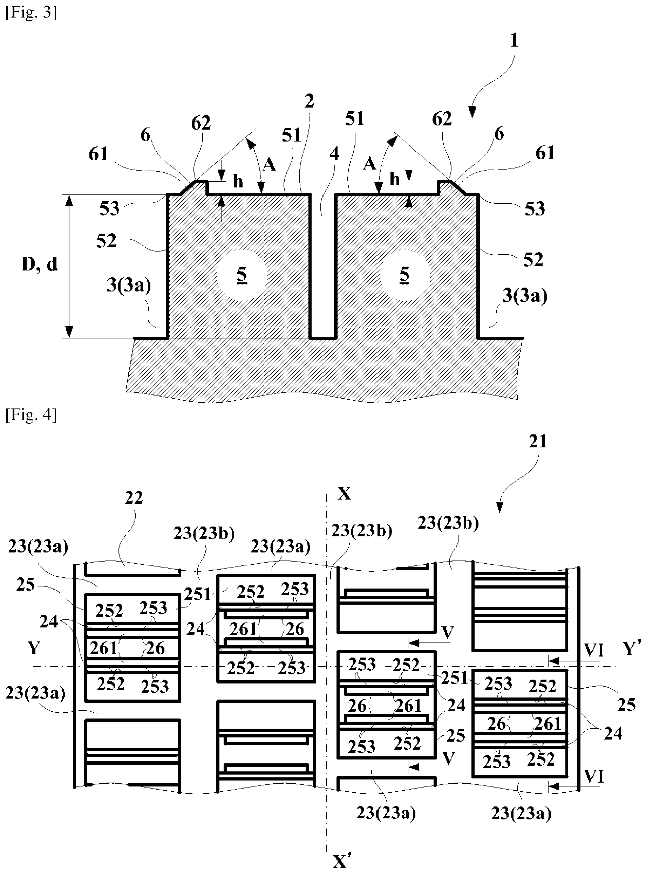

   Fig. 3 is a cross sectional view taken along line III-III in Fig. 1;
[Fig. 4]
   Fig. 4 is a schematic plan view of a tread according to a second embodiment of the present invention;
[Fig. 5]

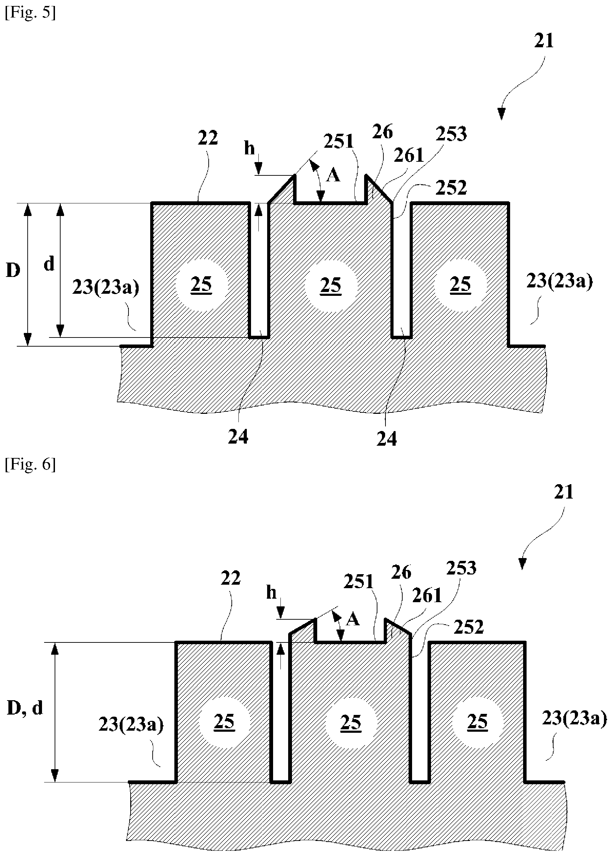

   Fig. 5 is a cross sectional view taken along line V-V in Fig. 4;
[Fig. 6]
   Fig. 6 is a cross sectional view taken along line VI-VI in Fig. 4;
[Fig. 7]

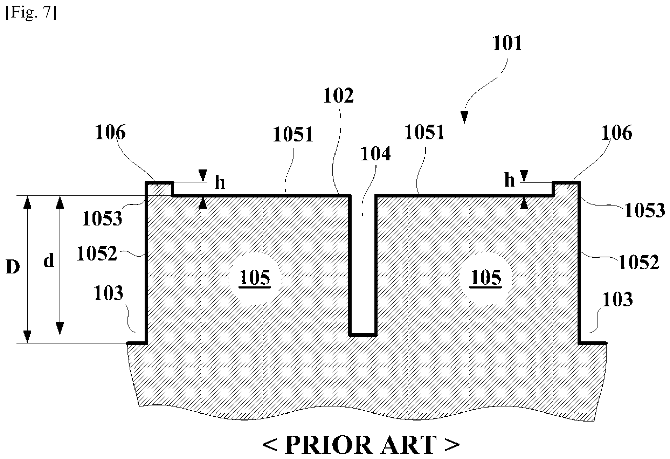

   Fig. 7 is a cross sectional view of a tread according to prior art.

### [Description of Embodiments]

Preferred embodiments of the present invention will be described below referring to the drawings.

A tread 1 for a tire according to a first embodiment of the present invention will be described referring to Figs. 1, 2 and 3.

Fig. 1 is a schematic plan view of a tread according to a first embodiment of the present invention. Fig. 2 is a cross sectional view taken along line II-II in Fig. 1. Fig. 3 is a cross sectional view taken along line III-III in Fig. 1.

The tread 1 is a tread for a tire having a contact face 2 intended to come into contact with ground during rolling, and a plurality of groove 3 of a depth D (shown in Figs. 2 and 3) opening to the contact face 2. The plurality of groove 3 includes a lateral groove 3a extending generally in axial orientation as indicated by line YY' and a circumferential groove 3b extending generally in circumferential orientation as indicated by line XX'. The plurality of groove 3 (the lateral groove 3a and the circumferential groove 3b) is delimiting a plurality of contact element 5, and the circumferential groove 3b is dividing the tread 1 axially into three block rows, two shoulder block rows located axially outward and one center block row. Each the plurality of contact element 5 is provided with a plurality of incision 4 of a depth d (shown in Figs. 2 and 3) extending generally in the axial orientation. The plurality of incision 4 is opening to the circumferential groove 3b at two axial ends. Each the plurality of contact element 5 has a top face 51 constituting a part of the contact face 2 and a frontal face 52 facing to the groove 3 (the lateral groove 3a). The top face 51 and the frontal face 52 creating an edge 53 at an intersection between the top face 51 and the frontal face 52.

As shown in Fig. 1, each the plurality of contact element 5 being provided with two projection portions 6 projecting radially outwardly from the top face 51 with a radial height h in a region between the closest edge 53 and 40% of a circumferential length of the contact element 5 from the closest edge 53 (shown in Figs. 2 and 3). Each the projection portion 6 is provided with a chamfered portion 61 in a whole width of the projection portion 6 on a side facing to the closest edge 53 and having an angle A relative to the top face 51 (shown in Figs. 2 and 3), and with a flat portion 62 parallel to the top face 51 (shown in Figs. 2 and 3). The projection portion 6 on one center block row is offset from the closest edge 53. Contrarily the projection portion 6 on two shoulder block rows is not offset from the closest edge 53.

As shown in Fig. 1, the projection portion 6 in two shoulder block rows of the tread 1 has a width narrower than a width of the contact element 5, and the projection portion 6 in one center block row of the tread 1 has a width equal to a width of the contact element 5. A rubber composition constituting the projection portion 6 is the same as a rubber composition constituting the contact element 5.

As shown in Fig. 2, the contact element 5 in two shoulder block rows of the tread 1 delimited by the groove 3 (the lateral groove 3a) of the depth D is provided with one incision 4 of the depth d at around circumferentially a center of the contact element 5, and the depth d of the incision 4 is shallower than the depth D of the groove 3 (the lateral groove 3a). In this first embodiment, the depth D of the groove 3 (the lateral groove 3a) is 9.2 mm, and the depth d of the incision 4 is 8.5 mm.

As shown in Fig. 2 the contact element 5 in two shoulder block rows of the tread 1 is provided with the projection portion 6 projecting radially outwardly from the top face 51 which is constituting a part of the contact face 2 with a radial height h in the region between the closest edge 53 and 40% of the circumferential length of the contact element 5 from the closest edge 53. A face of the projection portion 6 close to the closest edge 53 is flush with the frontal face 52 of the contact element 5. The radial height h of the projection portion 6 is at most equal to 20% of the depth D of the groove 3 or the depth d of the incision 4 whichever is deeper. In this first embodiment, the height h of the projection portion 6 is 1.0 mm.

As shown in Fig. 2, the projection portion 6 is provided with the chamfered portion 61 on the side facing to the closest edge 53. The projection portion 6 has the angle A relative to the top face 51 and this angle A is from 30 to 60 degrees. A radially innermost of the chamfered portion 61 is distant from the top face 51 when the tread 1 being bland new. The projection portion 6 further comprises the flat portion 62 parallel to the top face 51. In this first embodiment, the angle A of the chamfered portion 61 relative to the top face 51 is 35 degrees.

As shown in Fig. 3, the contact element 5 in one center block row of the tread 1 delimited by the groove 3 (the lateral groove 3a) of the depth D is also provided with one incision 4 of the depth d at around circumferentially a center of the contact element 5, and the depth d of the incision 4 is identical to the depth D of the groove 3 (the lateral groove 3a). In this first embodiment, the depth D of the groove 3 (the lateral groove 3a) and the depth d of the incision 4 are both 9.2 mm.

As shown in Fig. 3 the contact element 5 in one center block row of the tread 1 is provided with the projection portion 6 projecting radially outwardly from the top face 51 which is constituting a part of the contact face 2 with a radial height h in the region between the closest edge 53 and 40% of the circumferential length of the contact element 5 from the closest edge 53. The projection portion 6 is offset from the closest edge 53. The radial height h of the projection portion 6 is at most equal to 20% of the depth D of the groove 3 or the depth d of the incision 4 whichever is deeper. In this first embodiment, the height h of the projection portion 6 is 1.0 mm.

As shown in Fig. 3, the projection portion 6 is provided with the chamfered portion 61 on the side facing to the closest edge 53. The projection portion 6 has the angle A relative to the top face 51 and this angle A is from 30 to 60 degrees. The projection portion 6 further comprises the flat portion 62 parallel to the top face 51. In this first embodiment, the angle A of the chamfered portion 61 relative to the top face 51 is 40 degrees.

Since the contact element 5 is provided with at least one projection portion 6 projecting radially outwardly from the top face 51 with a radial height h, such the projection portion 6 is able to generate high pressure to scrape snow, performance on wintry surface especially snow performance can be improved.

Since the projection portion 6 is provided with a chamfered portion 61 on a side facing to the closest edge 53 and the chamfered portion 61 has an angle A relative to the top face 51 on cross sectional view along with circumferential orientation, such the chamfered portion 61 is able to prevent generating too high pressure and avoid curling of the projection portion 6, performance on non-wintry surface can be improved at the same time.

If the projection portion 6 is provided outside of the region between the closest edge 53 and 40% of a circumferential length of the contact element 5 from the closest edge 53, there is a risk that performance on wintry surface would be degraded as the projection portion 6 cannot generate high contact pressure efficiently. By placing the projection portion 6 in the region between the closest edge 53 and 40% of a circumferential length of the contact element 5 from the closest edge 53, the projection portion 6 can generate high contact pressure efficiently.

If the chamfered portion 61 is provided on a side opposite to the closest edge 53, the chamfered portion 61 would be less effective to prevent generating too high pressure and difficult to prevent curling of the projection portion 6, performance on non-wintry surface cannot be improved even performance on wintry surface may be improved. By placing the chamfered portion 61 on the side facing to the closest edge 53, it is possible to improve performance on wintry surface and on non-wintry surface at the same time.

Since radially innermost of the chamfered portion 61 is distant from the top face 51 when the tread 1 being bland new, performance on wintry surface can further be improved as it is possible to make longer a radial length along with the projection portion 6 with the chamfered portion 61 to be contact with wintry surface.

Since the projection portion 6 further comprises a flat portion 62 parallel to the top face 51, performance on non-wintry surface can further be improved as it is possible to make an angle between the chamfered portion 61 and ground in view of the projection portion 6 obtuse for preventing generation of too high pressure due to the projection portion 6 and occurrence of curling of the projection portion 6.

Since the chamfered portion 61 is provided in a whole width of the projection portion 6, performance on both wintry surface and non-wintry surface can further be improved as it is possible to increase effectiveness of the projection portion 6 provided with the chamfered portion 61.

Since the radial height h of the projection portion 6 is at most equal to 20% of the depth D of the groove 3 or the depth d of the incision 4 whichever is deeper, it is possible to improve effectively performance on wintry surface.

If this radial height h of the projection portion 6 is more than 20% of the depth D of the groove 3 or the depth d of the incision 4 whichever is deeper, there is a risk that the projection portion 6 would buckle easily which makes difficult to scrape snow thus performance on wintry surface would be degraded.

This height h of the projection portion 6 relative to the depth D of the groove 3 or the depth d of the incision 4 whichever is deeper is preferably at most equal to 15% and at least equal to 0.3 mm, more preferably at most equal to 15% and at least equal to 0.5 mm.

Since the angle A of the chamfered portion 61 is from 30 to 60 degrees, it is possible to effectively improve performance on non-wintry surface.

If the angle A of the chamfered portion 61 is less than 30 degrees, there is a risk that the chamfered portion 61 would be less effective to prevent generating too high pressure thus performance on non-wintry surface would be degraded. If the angle A of the chamfered portion 61 is more than 60 degrees, there is a risk that the chamfered portion 61 would be less effective to prevent curling of the projection portion 6, thus performance on non-wintry surface would be degraded also.

Since the projection portion 6 is flush with the frontal face 52 of the contact element 5 at least partly, performance on wintry surface would further be improved as it is possible to place the projection portion 6 where the projection portion 6 generates high contact pressure efficiently.

Since the projection portion 6 is offset from the closest edge 53, balance between performance on wintry surface and on non-wintry surface would be improved as it is possible to increase a degree of freedom for placing the projection portion 6.

Since a rubber composition constituting the projection portion 6 is the same as a rubber composition constituting the contact element 5, manufacturing efficiency of such the tread 1 would be improved as it is possible to manufacture efficiently the tread 1 having the contact element 5 provided with the projection portion 6 comprising the chamfered portion 61.

The projection portion 6 may be made of a material different than the rubber composition constituting the contact element 5, even partly. Such the material may still be a rubber composition.

The projection portion 6 may be provided in a various kind of form, for example curved, waved or combination of these forms with straight form. Multiple projection portions 6 may be provided relative to the one edge 53. In such the case, each the projection portion 6 may have the same form, or may have different form one another including its position relative to the edge 53, the height h of the projection portion 6 and/or the angle A of the chamfered portion 61 relative to the top face 51.

Only one projection portion 6 may be provided to one single contact element 5, or in case several projection portions 6 is provide to one single contact element 5, each the projection portion 6 may have the same form, or may have different form one another including its position relative to the edge 53, the height h of the projection portion 6 and/or the angle A of the chamfered portion 61 relative to the top face 51. Additional projection portion 6 may be provided to an edge made by the incision 4.

The chamfered portion 61 may extend to below the edge 53 as to include partly the contact element 5. Or the edge 53 of the contact element 5 may be chamfered also.

A tread 21 for a tire according to a second embodiment of the present invention will be described referring to Figs. 4, 5 and 6. Fig. 4 is a schematic plan view of a tread according to a second embodiment of the present invention. Fig. 5 is a cross sectional view taken along line V-V in Fig. 4. Fig. 6 is a cross sectional view taken along line VI-VI in Fig. 4. The construction of this second embodiment is similar to that of the first embodiment other than the arrangement shown in Figs. 4, 5 and 6, thus description will be made referring to Figs. 4, 5 and 6.

As shown in Fig. 4, a tread 21 having a contact face 22 intended to come into contact with ground during rolling and being provided with a plurality of groove 23 (a lateral groove 23a and a circumferential groove 23b). The plurality of groove 23 delimitating a plurality of contact element 25 having a top face 251 constituting a part of the contact face 22. The circumferential groove 23b is dividing the tread 21 axially into four block rows, two shoulder block rows located axially outward and two center block tows. Each the plurality of contact element 25 is provided with a plurality of incision 24 extending generally in the axial orientation. The plurality of incision 24 is opening to the circumferential groove 23b at two axial ends and is creating an edge 253 with a frontal face 252 made by the incision 24.

As shown in Fig. 4, each the plurality of contact element 25 being provided with two projection portions 26 in a region between the closest edge 253 and 40% of a circumferential length of the contact element 25 from the closest edge 253. Each the projection portion 26 is provided with a chamfered portion 261 in a whole width of the projection portion 26 on a side facing to the closest edge 253 and having an angle A relative to the top face 251 (shown in Figs. 5 and 6). The projection portion 26 is not offset from the closest edge 253.

As shown in Fig. 4, the projection portion 26 in two shoulder block rows of the tread 21 has a width equal to a width of the contact element 25, and the projection portion 26 in two center block rows of the tread 21 has a width narrower than a width of the contact element 25. A rubber composition constituting the projection portion 26 is the same as a rubber composition constituting the contact element 25.

As shown in Fig. 5, the contact element 25 on two center block rows of the tread 21 delimited by the groove 23 (the lateral groove 23a) is divided into three portions by the incision 24, and the projection portion 26 is provided only to a middle portion of the contact element 25. The projection portion 26 is provided with the chamfered portion 261 facing to the closest edge 253 without having a flat part parallel to the top face 251. The chamfered portion 261 is provided as to connect the closest edge 253 and a point where the projection portion 26 has a height h with an angle A relative to the top face 251. In this second embodiment, the height h of the projection portion 26 is 0.8 mm, and the angle A of the chamfered portion 261 is 45 degrees.

As shown in Fig. 6, the contact element 25 on two shoulder block rows of the tread 21 delimited by the groove 23 (the lateral groove 23a) is also divided into three portions by the incision 24, and the projection portion 26 is provided only to a middle portion of the contact element 25. The projection portion 26 is provided with the chamfered portion 261 facing to the closest edge 253 without having a flat part parallel to the top face 251. Radially innermost of the chamfered portion 261 is distant from the top face 251 when the tread 21 being bland new, and the projection portion 26 is flush with the frontal face 252 of the contact element 25. The projection portion 26 has a height h and the chamfered portion 261 has an angle A relative to the top face 251. In this second embodiment, the height h of the projection portion 26 is 0.8 mm, and the angle A of the chamfered portion 261 is 30 degrees.

The projection portion 26 may be provided on the other portion divided by the incision 24, and not only to one single portion but also to several portions.

The invention is not limited to the examples described and represented and various modifications can be made within the scope of the appended claims.

Fig. 7 is a cross sectional view of a tread according to prior art. In this Fig. 7, a tread 101 being provided with a plurality of groove 103 of a depth D delimitating a plurality of contact element 105 having a top face 1051 constituting partly a contact face 102 of the tread 101. The contact element 105 is provided with an incision 104 of a depth d at around a center of the contact element 105. The top face 1051 and a frontal face 1052 creating an edge 1053, a projection portion 106 of a height h being provided as to be flush with the frontal face 1052 of the contact element 105. A top of the projection portion 106 is parallel to the top face 1051. The projection portion 106 has no chamfered portion.

### [Examples]

In order to confirm the effect of the present invention, one type of block sample of Example to which the present invention is applied and other types of block samples of Reference and Comparative Example were prepared.

The Example was a block sample as described in the above the first embodiment having the height h of the projection portion equal to 1.0 mm, the angle A equal to 45 degrees, the depth D equals to 6.1 mm, a distance between two frontal faces in circumferential orientation equal to 20 mm and with one incision provided. The Comparative Example was also a block sample having the same configuration as Example but without chamfered portion. The Reference was also a block sample having the same configuration as Example but without the projection portion. All the Example, Comparative Example and Reference were made of the same rubber material.

### Snow performance tests:

The friction coefficient measurement on snow were carried out with the above Example and Reference sliding at a given condition (a displacement: 0 to 0.03 m, a speed: 0 to 0.5 m/s, and an acceleration: 5 m/s²) over a hard pack snow track, set at about -10°C with a CTI penetrometer reading of about 88 in accordance with Standard ASTM F1805, with an imposed normal stress (about 300 kPa). The forces generated in a direction of travel (Fx) of each of the Example and Reference and in another direction perpendicular to the travel (Fz) were measured. The Fx/Fz ratio determines the friction coefficient of each of the Example and Reference on the snow. This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on snow which would be obtained after a running test on a vehicle fitted with tires whose tread is composed of the same contact elements.

The results are shown in table 1. In this table 1, results are represented by an index of 100 for Reference, higher the number indicates better the performance.

### Wet performance tests:

The friction coefficient measurement on wet were carried out with the above Example and Reference sliding at a given condition (a load: for example 3 kg/cm², a speed: 0 to 5 m/s and an acceleration: 100 m/s²) over a road cores made of BBTM type asphalt concrete according to the standard NFP 98-137 covered by 1 mm deep water of 25 °C in a direction of travel of each of the Example and Reference. A maximum friction coefficient detected during sliding while varying a slip ratio from 0 to 50% determines the friction coefficient of each of the Example and Reference on the wet.

The results are also shown in table 1. In this table 1, results are represented by an index of 100 for Reference, higher the number indicates better the performance.

**[Table 1]**

| | Example | Comparative Example | Reference |
|---|---|---|---|
| Snow performance (index) | 105 | 105 | 100 |
| Wet performance (index) | 106 | 104 | 100 |

As seen from table 1, the Example shows improvement on non-wintry surface while maintaining good performance on wintry surface.

### [Reference Signs List]

1, 21 tread
2, 22 contact face
3(3a, 3b), 23(23a, 23b) groove
4, 24 incision
5, 25 contact element
51, 251 top face
52, 252 frontal face
53,253 edge
6, 26 projection portion
61, 261 chamfered portion
62 flat portion

## Claims

1. A tire comprising a tread (1) having a contact face (2) intended to come into contact with a ground during rolling, the tread (1) being provided with a plurality of grooves (3) of a depth D and/or a plurality of incisions (4) of a depth d extending generally in axial orientation of the tire and being disposed such that at least two grooves or two incisions or one groove and one incision being always located within a contact patch of the tire mounted onto a standard rim at nominal pressure and under nominal load, the plurality of grooves (3) and/or the plurality of incisions (4) delimitating a plurality of contact elements (5), the plurality of contact elements (5) having a top face (51) constituting a part of the contact face (2) and a frontal face (52) facing to the groove (3) or to the incision (4), the top face (51) and the frontal face (52) creating an edge (53) at an intersection between the top face (51) and the frontal face (52), at least one of the plurality of contact elements (5) being provided with at least one projection portion (6) projecting radially outwardly from the top face (51) with a radial height h in a region between the closest edge (53) and 40% of a circumferential length of the contact element (5) from the closest edge (53), the projection portion (6) further comprising a flat portion (62) parallel to the top face (51),
the tire being **characterized in that** the projection portion (6) is provided with a chamfered portion (61) on a side facing to the closest edge (53), **in that** the chamfered portion (61) has an angle A relative to the top face (51) on cross sectional view along with circumferential orientation, and **in that** the angle A of the chamfered portion (61) is from 30 to 60 degrees.

2. The tire according to Claim 1, **wherein** radially innermost of the chamfered portion (61) is distant from the top face (51) when the tread (1) being bland new.

3. The tire according to Claim 1 or Claim 2, **wherein** the chamfered portion (61) is provided in a whole width of the projection portion (6).

4. The tire according to any one of the Claims 1 to 3, **wherein** the radial height h of the projection portion (6) is at most equal to 20% of the depth D of the groove (3) or the depth d of the incision (4) whichever is deeper.

5. The tire according to any one of the Claims 1 to 4, **wherein** the projection portion (6) is flush with the frontal face (52) of the contact element (5) at least partly.

6. The tire according to any one of the Claims 1 to 4, **wherein** the projection portion (6) is offset from the closest edge (53).

7. The tire according to any one of the Claims 1 to 6, **wherein** a rubber composition constituting the projection portion (6) is the same as a rubber composition constituting the contact element (5).

## Patentansprüche

1. Reifen mit einer Lauffläche (1), die eine Kontaktfläche (2) aufweist, die dazu gedacht ist, während des Rollens mit einem Boden in Kontakt zu kommen, wobei die Lauffläche (1) mit einer Vielzahl von Rillen (3) mit einer Tiefe D und/oder einer Vielzahl von Einschnitten (4) mit einer Tiefe d versehen ist, die sich allgemein in axialer Ausrichtung des Reifens erstrecken und so angeordnet sind, dass mindestens zwei Rillen oder zwei Einschnitte oder eine Rille und ein Einschnitt stets innerhalb einer Aufstandsfläche des bei Nenndruck und unter Nennlast auf einer Normalfelge montierten Reifens angeordnet sind, wobei die Vielzahl von Rillen (3) und/oder die Vielzahl von Einschnitten (4) eine Vielzahl von Kontaktelementen (5) begrenzen, wobei die Vielzahl von Kontaktelementen (5) eine obere Fläche (51), die einen Teil der Kontaktfläche (2) ausmacht, und eine vordere Fläche (52) aufweisen, die der Rille (3) oder dem Einschnitt (4) zugewandt ist, wobei die obere Fläche (51) und die vordere Fläche (52) einen Rand (53) an einer Kreuzung zwischen der oberen Fläche (51) und der vorderen Fläche (52) herstellen, wobei mindestens eines der Vielzahl von Kontaktelementen (5) mit mindestens einem Vorsprungabschnitt (6) versehen ist, der von der oberen Fläche (51) in einem Bereich zwischen dem nächstliegenden Rand (53) und 40% einer Umfangslänge des Kontaktelements (5) von dem nächstliegenden Rand (53) mit einer radialen Höhe h radial nach außen ragt, wobei der Vorsprungabschnitt (6) ferner einen flachen Abschnitt (62) parallel zu der oberen Fläche (51) umfasst, **dadurch gekennzeichnet, dass** der Vorsprungabschnitt (6) an einer dem nächstliegenden Rand (53) zugewandten Seite mit einem abgeschrägten Abschnitt (61) versehen ist, dass der abgeschrägte Abschnitt (61) einen Winkel A bezüglich der oberen Fläche (51) bei einer Querschnittsansicht und zusammen mit Umfangsausrichtung hat und dass der Winkel A des abgeschrägten Abschnitts (61) von 30 bis 60 Grad beträgt.

2. Reifen nach Anspruch 1, wobei radial am weitesten innen an dem abgeschrägten Abschnitt (61) von der oberen Fläche (51) entfernt ist, wenn die Lauffläche (1) brandneu ist.

3. Reifen nach Anspruch 1 oder Anspruch 2, wobei der abgeschrägte Abschnitt (61) in einer gesamten Breite des Vorsprungabschnitts (6) vorgesehen ist.

4. Reifen nach einem der Ansprüche 1 bis 3, wobei die radiale Höhe h des Vorsprungabschnitts (6) fast gleich 20% der Tiefe D der Rille (3) oder der Tiefe d des Einschnitts (4), was immer tiefer ist.

5. Reifen nach einem der Ansprüche 1 bis 4, wobei der Vorsprungabschnitt (6) mindestens teilweise mit der vorderen Fläche (52) des Kontaktelements (5) bündig ist.

6. Reifen nach einem der Ansprüche 1 bis 4, wobei der Vorsprungabschnitt (6) von dem nächstliegenden Rand (53) versetzt ist.

7. Reifen nach einem der Ansprüche 1 bis 6, wobei eine Kautschukzusammensetzung, aus der der Vorsprungabschnitt (6) besteht, dieselbe wie eine Kautschukzusammensetzung ist, aus der das Kontaktelement (5) besteht.

## Revendications

1. Pneumatique comprenant une bande de roulement (1) ayant une face de contact (2) destinée à entrer en contact avec un sol pendant le roulement, la bande de roulement (1) étant pourvue d'une pluralité de rainures (3) d'une profondeur D et/ou d'une pluralité d'incisions (4) d'une profondeur d s'étendant généralement dans une orientation axiale du pneumatique et étant disposées de sorte qu'au moins deux rainures ou deux incisions ou une rainure et une incision sont toujours situées dans une zone de contact du pneumatique monté sur une jante standard à une pression nominale et sous une charge nominale, la pluralité de rainures (3) et/ou la pluralité d'incisions (4) délimitant une pluralité d'éléments de contact (5), la pluralité d'éléments de contact (5) ayant une face supérieure (51) constituant une partie de la face de contact (2) et une face frontale (52) faisant face à la rainure (3) ou à l'incision (4), la face supérieure (51) et la face frontale (52) créant un bord (53) au niveau d'une intersection entre la face supérieure (51) et la face frontale (52), au moins l'un de la pluralité d'éléments de contact (5) étant pourvu d'au moins une partie en saillie (6) faisant saille radialement vers l'extérieur depuis la face supérieure (51) avec une hauteur radiale h dans une région entre le bord (53) le plus proche et 40 % d'une longueur circonférentielle de l'élément de contact (5) depuis le bord (53) le plus proche, la partie en saillie (6) comprenant en outre une partie plate (62) parallèle à la face supérieure (51),
le pneumatique étant **caractérisé en ce que** la partie en saillie (6) est pourvue d'une partie chanfreinée (61) sur un côté orienté vers le bord (53) le plus proche, **en ce que** la partie chanfreinée (61) a un angle A par rapport à la face supérieure (51) sur une vue en section transversale avec une orientation circonférentielle, et **en ce que** l'angle A de la partie chanfreinée (61) est de 30 à 60 degrés.

2. Pneumatique selon la revendication 1, radialement le plus à l'intérieur de la partie chanfreinée (61) est distant de la face supérieure (51) lorsque la bande roulement (1) est neuve.

3. Pneumatique selon la revendication 1 ou la revendication 2, la partie chanfreinée (61) étant prévue dans une largeur totale de la partie en saillie (6).

4. Pneumatique selon l'une quelconque des revendications 1 à 3, la hauteur radiale h de la partie en saillie (6) étant au plus égale à 20 % de la plus profonde parmi la profondeur D de la rainure (3) et la profondeur d de l'incision (4).

5. Pneumatique selon l'une quelconque des revendications 1 à 4, la partie en saillie (6) étant au moins partiellement dans l'alignement de la face frontale (52) de l'élément de contact (5).

6. Pneumatique selon l'une quelconque des revendications 1 à 4, la partie en saillie (6) étant décalée du bord (53) le plus proche.

7. Pneumatique selon l'une quelconque des revendications 1 à 6, une composition de caoutchouc constituant la partie en saille (6) étant la même qu'une composition de caoutchouc constituant l'élément de contact (5).
